# EUROPEAN PATENT SPECIFICATION

(11) **EP 3 668 013 B1**
(45) Date of publication and mention of the grant of the patent: **31.05.2023**
(21) Application number: 19207155.3
(22) Date of filing: 16.11.2016
(51) Int. Cl.: H04L 41/5051, H04L 41/0896, H04L 41/084, H04L 41/0895, H04L 41/40, G06F 9/455

(54) **VIRTUAL NETWORK FUNCTION CONFIGURATION METHOD AND APPARATUS**
VERFAHREN UND VORRICHTUNG ZUR KONFIGURATION EINER VIRTUELLEN NETZWERKFUNKTION
PROCÉDÉ ET APPAREIL DE CONFIGURATION D'UNE FONCTION DE RÉSEAU VIRTUEL

(30) Priority: 30.11.2015 CN 201510860808
(43) Date of publication of application: 17.06.2020
(62) Divisional of application: 16869878.5
(73) Proprietor: HUAWEI TECHNOLOGIES CO., LTD., Shenzhen, Guangdong 518129 (CN)
(72) Inventor: ZHANG, Liang, Shenzhen, Guangdong 518129 (CN); WANG, Qiaoling, Shenzhen, Guangdong 518129 (CN); BAO, Dewei, Shenzhen, Guangdong 518129 (CN); XUE, Li, Shenzhen, Guangdong 518129 (CN)
(74) Representative: Gill Jennings & Every LLP

(56) References cited:
- WO-A1-2015/113234
- CN-A- 104 951 353
- HUAWEI: "IFA004 Role of SDN Controller in NFV Acceleration Management;NFVIFA(15)000509r4_IFA004_Role_ of_SDN_Controller_in_NFV_Acceleration_Mana gement", ETSI DRAFT; NFVIFA(15)000509R4_IFA004_ROLE_OF_SDN_CONT ROLLER_IN_NFV_ACCELERATION_MANAGEMENT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, 21 May 2015 (2015-05-21), pages 1-4, XP014240391,

## Description

### TECHNICAL FIELD

The present invention relates to computer technologies, and in particular, to a virtual network function configuration method and apparatus.

### BACKGROUND

A modem network is increasingly relying on various network processing functions, for example, security (a firewall, an intrusion detection system, and the like), traffic shaping (load balancing), network address translation, to improve network application performance (a traffic accelerator, a cache, and an agent). A network device having these functions has been a key network infrastructure, and this is crucial for adaptiveness performance, security, and policy and rule compliance requirements of a network.

Because it is difficult for a professional device to change a function to adapt to increasingly changing traffic requirements, network functions virtualization (English: Network Function Virtualization, NFV for short) leads a network into a new era of virtualization. Network functions virtualization uses software to implement a network function, may run on various standard server hardware, and may be moved to and instantiated at different network locations according to a requirement, without a need to install a new device. That is, a unified platform (a general server, a memory, and a switch) is used to replace a specialized network device, different network processing functions are provided by using software, and network function performance is improved through cooperation with a hardware accelerator, a graphics processing unit (English: Graphics Processing Unit, GPU for short), a field-programmable gate array (English: Field-Programmable Gate Array, FPGA for short), and the like.

However, in the foregoing manner, only one accelerator can be selected on the unified platform to perform acceleration, and once an accelerator is selected and used, the accelerator cannot be changed to another accelerator.

CN 104 951 353 describes method and apparatus for implementing acceleration processing on VNF.

WO 2015/113234 describes virtualizing network functions.

HUAWEI: "IFA004 Role of SDN Controller in NFV Acceleration Management; NFVIFA(15)000509r4_1FA004_Role_of_SDN_Controller_in_NFV Acceleration_Management", ETSI DRAFT; NFVIFA(15)000509R4_1FA004_ROLE_OF SDN_CONTROLLER_IN_NFV ACCELERATION_MANAGEMENT, EUROPEAN TELECOMMUNICATIONS STANDARDS INSTITUTE (ETSI), 650, ROUTE DES LUCIOLES; F-06921 SOPHIA-ANTIPOLIS ; FRANCE, vol. ISG- NFV, 21 May 2015 describes the role of SDN controller in NFV acceleration management.

### SUMMARY

Embodiments of the present invention provide a virtual network function configuration method and apparatus, as set forth in the claims, so as to resolve a prior-art problem that an accelerator used on a unified platform cannot be changed during use.

A first aspect of the present invention provides a virtual network function configuration method as defined in claim 1.

A service chain in this solution is not limited to a network function of a single service node. The configuration method is also applicable to configuration for multiple service nodes on the service chain. That is, the configuration method may be used to configure a network function of one service node, and may also be used to perform dynamic configuration on network functions of two or more service nodes in the foregoing manner.

In this solution, in a process of using the service chain, network functions that use different acceleration devices are searched, according to a change of requirement information of the network function, in the instance library to reconfigure the service chain, so that network function performance is effectively improved, and dynamic configuration for an acceleration resource of the network function is implemented.

In a specific implementation, the NF instance library further includes an NF description table, each entry of the NF description table includes an instance descriptor, and the instance descriptor is used to describe an instance file for which one service function is based on one acceleration device; and
the instance descriptor includes a function type and at least one of the following parameters: an acceleration device type, a throughput, a maximum capability, an average processing batch value, or device utilization.

To implement dynamic configuration for an acceleration resource of each service function, multiple hardware accelerators, also referred to as acceleration devices, need to be disposed in an entire system, such as an MIPS, a GPU, an FPGA, and a CPU, and an instance library that is of a new virtual network function and that is different from the prior art needs to be configured, that is, the foregoing NF instance library. The instance library includes instances for which each network function is corresponding to each acceleration device, and includes instance descriptors of the instances. A specific implementation is as follows: The instance descriptors and the corresponding instances are mapped to the NF description table, and are used for an inquiry in a configuration process.

Optionally, instance descriptors of various acceleration devices corresponding to the same NF may also be stored in a sub-table, that is, different sub-tables represent different NFs. In addition, a manner of using the instance descriptor is only one of implementations. Each instance in the NF instance library may also be distinguished in another manner, for example, each instance is distinguished by way of numbering, naming, or the like. This is not limited in this application, and configuration may be performed according to an actual implementation environment.

In addition, the instance descriptor can indicate at least a type of a network function, and a type, performance, or the like of a corresponding acceleration device.

This solution provides a specific implementation of an NF instance library. Each instance is mapped by storing instance descriptors of all NF instances into the NF description table. In a process of using the service chain, the NF description table may be inquired according to the network function requirement after the network function configuration request is received, and an instance of a network function that satisfies the requirement is quickly found in the instance library according to a found instance descriptor, to reconfigure the service chain, so that network function performance is effectively improved, and dynamic configuration for an acceleration resource of the network function is implemented.

In another specific implementation, the network function requirement includes at least one of a target throughput, a request capability, or a peak data volume.

With reference to the foregoing implementations, the network function requirement needs to clarify a requirement that a configured network function should satisfy. Therefore, at least one performance parameter is needed for determining.

Further, in still another specific implementation, the obtaining, from a network function NF instance library, an NF instance file that satisfies the network function requirement of the service node includes:
obtaining, from the NF description table, an NF description entry including an instance descriptor that satisfies the network function requirement; and
obtaining, from instance files of the NF instance library according to the obtained NF description entry, the NF instance file that satisfies the network function requirement.

The foregoing solution means that the NF description table in the foregoing implementation is inquired according to a performance requirement of the network function requirement, to obtain an instance descriptor that can satisfy the requirement, and then an NF instance corresponding to the selected instance descriptor is found in the instance library. The specific implementation is relatively simple, and processing efficiency can be improved in a specific configuration process.

Further, when the service node is located on a service chain, the network function configuration request includes a network function requirement of each service node on the service chain and a target throughput and a peak data volume that are of the service chain, the network function requirements of each service node include a request capability of the service node, and the method further includes:
successively obtaining, according to the service chain and the NF description table, a first instance descriptor set of a network function corresponding to each service node;
obtaining, from the first instance descriptor set corresponding to each service node, a second instance descriptor set that satisfies the target throughput and that is corresponding to each service node;
obtaining, from the second instance descriptor set corresponding to each service node, a third instance descriptor set for which a maximum capability is higher than the request capability of the service node;
obtaining, from the third instance descriptor set corresponding to each service node, a fourth instance descriptor set for which an average processing batch value is greater than the peak data volume; and
obtaining, according to utilization and/or a priority of an acceleration resource of a network function corresponding to each instance descriptor from the fourth instance descriptor set corresponding to each service node, an instance descriptor that satisfies the network function requirement of the service node.

Further, when the service node is located on the service chain, the performing network function configuration on the service node according to the obtained NF instance file includes:
directing a service of each service node on the service chain to a pre-configured failure protection data plane, where the service continues to be processed on the failure protection data plane;
reconfiguring each service node on the service chain according to the obtained NF instance file that satisfies the network function requirement of each service node, to generate a new service chain; and
redirecting the service on the failure protection data plane to the new service chain.

The foregoing two solutions comprehensively provide a specific configuration process of a network function. After the network function configuration request is received, an appropriate NF instance needs to be obtained according to requirement information in the network function configuration request. A general case is that the requirement information includes performance requirements such as the target throughput, the request capability, and the peak data volume. The foregoing solutions only provide a manner in which selection is performed according to a sequence of the NF type, the throughput, the capability, the processing batch value, the accelerator type, and the utilization. Actually, processing may be performed according to any sequence during specific implementation. The foregoing implementation sequence is not limited, provided that a finally selected NF instance satisfies all requirements.

Optionally, for a single service node, the performing network function configuration on the service node according to the obtained NF instance file includes:
directing a service that is being processed by the service node to a pre-configured failure protection data plane, where the service continues to be executed on the failure protection data plane;
re-performing network function configuration on the service node according to the obtained NF instance file that satisfies the network function requirement of the service node; and
redirecting the service on the failure protection data plane to the service node after network function configuration for the service node is complete.

After the NF instance library is selected, to ensure that a service is not interrupted in a specific configuration process, a service that is currently being executed cannot be directly ended, and each service on the service chain may be directed to the failure protection data plane on which each service continues to be executed. The failure data protection plane mentioned herein may be standby hardware that has been configured, or may be a data plane generated according to network functions of each node on the service chain, and is required to be in one-to-one correspondence with service functions of each node on the service chain. Therefore, in a specific configuration process, a current service is directed to the pre-obtained failure data protection plane for continuous execution, and then a new high-performance data plane is created according to the obtained NF instance that satisfies the requirement. That is, each service node is reconfigured, to generate a new service chain, and then the service is directed back to the new service chain for execution, to complete configuration.

The configuration solution may support a serving chain including multiple NFs, that is, the service chain, and a function of improving NF performance by an acceleration device of hardware can be used. In addition, the NF instance library is elastically extended. An appropriate NF instance may be obtained according to a multiple-layer matching method, and the appropriate NF instance may be quickly and effectively selected online. An acceleration resource is automatically selected and configured, and this reduces time and effort.

Based on any one of the foregoing implementations, the method further includes:
sending a configuration response message to the network management system, where the configuration response message is used to notify the network management system whether network function configuration is complete.

Regardless of whether the appropriate NF instance is selected, corresponding feedback information, that is, the foregoing configuration response message, can be sent to the network management system, to feed back that the configuration is complete or is not complete. Alternatively, a performance parameter or an instance descriptor that is closest to the NF instance may be fed back for selection by a user.

Based on any one of the foregoing embodiments, further, before the receiving a network function configuration request, the method further includes:
configuring the NF instance library according to each service function and a pre-obtained image file of each acceleration device.

To implement dynamic configuration for network functions of each node on the service chain, the NF instance library needs to be pre-established. The NF instance library may be established in a general server. In addition, various types of hardware accelerators, that is, acceleration devices, are further needed, and need to be configured according to the pre-obtained image file. This instance may be a pre-compiled binary file, or a binary file on which placement and routing are performed. To configure a new high-performance service chain according to the selected NF instance, the same application programming interface (English: Application Programming Interface, API for short) should be explicitly defined for each NF instance.

A second aspect of the present invention provides a virtual network function configuration apparatus as defined in claim 9.

Further, the processing module is further configured to configure the NF instance library according to each service function and a pre-obtained image file of each acceleration device, where the NF instance library further includes an NF description table, each entry of the NF description table includes an instance descriptor, and the instance descriptor is used to describe an instance file for which one service function is based on one acceleration device; and
the instance descriptor includes a function type and at least one of the following parameters: an acceleration device type, a throughput, a maximum capability, an average processing batch value, or device utilization.

Further, the network function requirement includes at least one of a target throughput, a request capability, or a peak data volume.

Further, the processing module is specifically configured to:
obtain, from the NF description table, an NF description entry including an instance descriptor that satisfies the network function requirement; and
obtain, from instance files of the NF instance library according to the obtained NF description entry, the NF instance file that satisfies the network function requirement.

Further, the service node is located on a service chain, the network function configuration request includes a network function requirement of each service node on the service chain and a target throughput and a peak data volume that are of the service chain, the network function requirements of each service node include a request capability of the service node, and the processing module is further configured to:
successively obtain, according to the service chain and the NF description table, a first instance descriptor set of a network function corresponding to each service node;
obtain, from the first instance descriptor set corresponding to each service node, a second instance descriptor set that satisfies the target throughput and that is corresponding to each service node;
obtain, from the second instance descriptor set corresponding to each service node, a third instance descriptor set for which a maximum capability is higher than the request capability of the service node;
obtain, from the third instance descriptor set corresponding to each service node, a fourth instance descriptor set for which an average processing batch value is greater than the peak data volume; and
obtain, according to utilization and/or a priority of an acceleration resource of a network function corresponding to each instance descriptor from the fourth instance descriptor set corresponding to each service node, an instance descriptor that satisfies the network function requirement of the service node.

Further, when the service node is located on the service chain, the configuration module is further configured to:
direct a service of each service node on the service chain to a pre-configured failure protection data plane, where the service continues to be processed on the failure protection data plane;
reconfigure each service node on the service chain according to the obtained NF instance file that satisfies the network function requirement of each service node, to generate a new service chain; and
redirect the service on the failure protection data plane to the new service chain.

Optionally, the configuration module is specifically configured to:
direct a service that is being processed by the service node to a pre-configured failure protection data plane, where the service continues to be executed on the failure protection data plane;
re-perform network function configuration on the service node according to the obtained NF instance file that satisfies the network function requirement of the service node; and
redirect the service on the failure protection data plane to the service node after network function configuration for the service node is complete.

Further, the apparatus further includes:
a sending module, configured to send a configuration response message to the network management system, where the configuration response message is used to notify the network management system whether network function configuration is complete.

In addition, the present invention further provides an elastically extensible system architecture that can be configured for an acceleration device for a network function, where the system architecture includes a general server and multiple acceleration devices, and a configuration manager, an NF instance library, and the like that are configured to execute the foregoing technical solutions for a user are disposed in the general server unit.

According to the virtual network function configuration method and apparatus provided in the present invention, the NF instance file that satisfies the network function requirement of each service node is obtained from the network function NF instance library according to the received network function configuration request sent by the network management system, where the NF instance library includes the instance file for which each service function is based on each acceleration device, and function configuration is performed on each service node according to the obtained NF instance file. The service node may be a service node that is newly added into a network or a service node that has been deployed in a network and that processes a service. In the present invention, network function configuration may be performed on the service node according to the network function requirement of the network function configuration request, so that network function performance can be effectively improved, and dynamic configuration for an acceleration resource of the network function is implemented.

### BRIEF DESCRIPTION OF DRAWINGS

To describe the technical solutions in the embodiments of the present invention more clearly, the following briefly describes the accompanying drawings required for describing the embodiments.
FIG 1 is a schematic diagram of a system architecture that can be used to implement NF configuration according to an embodiment of the present invention;
FIG 2 is a flowchart of a virtual network function configuration method according to an embodiment of the present invention;
FIG 3 is a schematic structural diagram of an NF description table of a virtual network function configuration method according to an embodiment of the present invention;
FIG 4 is a flowchart of selecting an NF instance that conforms to a network function requirement in a virtual network function configuration method according to an embodiment of the present invention;
FIG 5 is a schematic structural diagram of a virtual network function configuration apparatus according to an embodiment of the present invention;
FIG 6 is a schematic structural diagram of another virtual network function configuration apparatus according to an embodiment of the present invention;
FIG 7 is a schematic structural diagram of a configuration manager according to an embodiment of the present disclosure; and
FIG 8 is a schematic structural diagram of another configuration manager according to an embodiment of the present disclosure.

### DESCRIPTION OF EMBODIMENTS

To make the purpose, technical solutions, and advantages of the embodiments of the present invention clearer, the following describes the technical solutions of the embodiments of the present invention with reference to the accompanying drawings in the embodiments of the present invention.

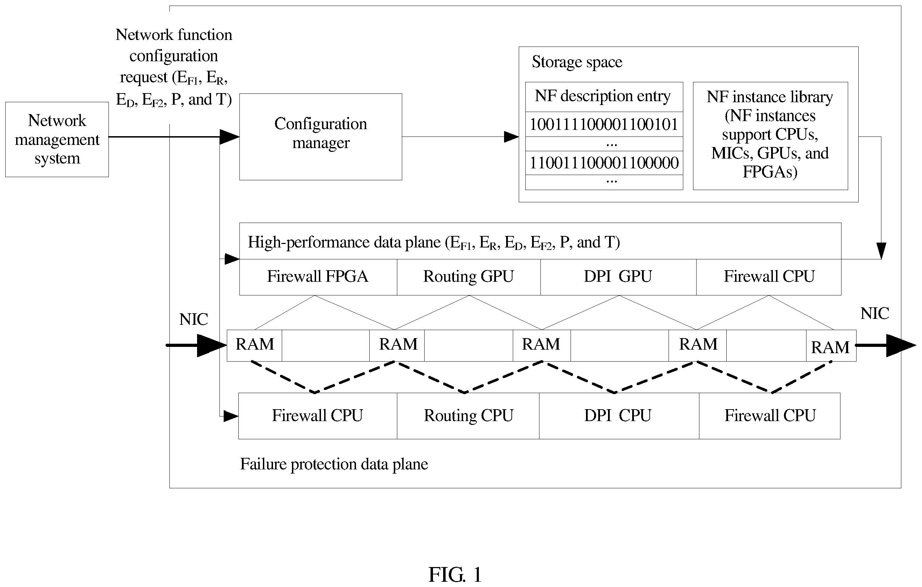

FIG 1 is a schematic diagram of a system architecture that can be used to implement NF configuration according to an embodiment of the present invention. The system architecture is an elastically extensible hardware acceleration NFV structure, and includes a general server and a hardware device (that is, a hardware accelerator, for example, CPUs, MICs, GPUs, and FPGAs that are shown in the figure) that is configured to perform acceleration. This architecture shows three most common network functions in a wide area network: routing, firewall, and deep packet inspection (English: Deep Packet Inspection, DPI for short). The architecture supports extension of NFs and an acceleration device, and supports online reconfiguration on demand.

As shown in FIG 1, the system architecture includes: (a). an NF instance library; (b). a configuration manager; (c). a high-performance data plane established by using NF instances that conform to a requirement and that are selected from the NF instance library according to a configuration request; and (d). a failure data protection plane that is used for reconfiguration. The NF instance library includes all NF instances, including a software instance and a hardware acceleration-based instance. These instances may be pre-compiled binary files (supporting a CPU, MICs, and a GPU) or binary files (that support an FPGA, and may be directly downloaded to the FPGA) on which placement and routing (English: placement and routing) are performed. In addition, in the NF instance library and a specific implementation solution of the present invention, when an NF description entry is used to map an NF instance, the NF description entry and the NF instance may be stored in the same storage space, as shown in FIG 1, or may be stored separately. This is not limited in the present invention. Each NF instance should explicitly define the same application programming interface (English: Application Programming Interface, API for short), and in addition, each NF instance is corresponding to an NF description entry that can be accessed by the configuration manager, so that the configuration manager can invoke an NF instance to generate the high-performance data plane.

The configuration manager receives a network function configuration request sent by a network management system (a system that can be operated by a user to input a related requirement, and may be a separate system, or may be a system installed in the general server). The network function configuration request includes a network function requirement of at least one service node. For example, the network function requirements are E_{F1}, E_{R}, E_{D}, E_{F2}, P, and T that are shown in FIG 1. E_{F1} indicates a maximum capability of Firewall1, E_{R} indicates a maximum capability of Routing, E_{D} indicates a maximum capability of DPI, E_{F2} indicates a maximum capability of Firewall2, P indicates a peak data volume, and T indicates a target throughput. The configuration manager obtains, from an NF description table according to the network function requirement, an NF description entry including an instance descriptor that satisfies the network function requirement, and then obtains a corresponding instance file from the NF instance library according to the NF description entry. The instance file can satisfy the network function requirement. Then, the configuration manager creates a new high-performance data plane, and switches from a currently used high-performance data plane to the new high-performance data plane.

In addition, a random access memory (English: random access memory, RAM for short) in FIG 1 is configured to implement communication between different acceleration devices. A network interface card (English: Network Interface Card, NIC for short) is configured to connect the system to a network. During specific implementation, service data enters each service node by using the NIC from the network to implement different network functions, and then enters the network by using the NIC.

The following describes the virtual network function configuration method in detail based on the architecture shown in FIG 1.

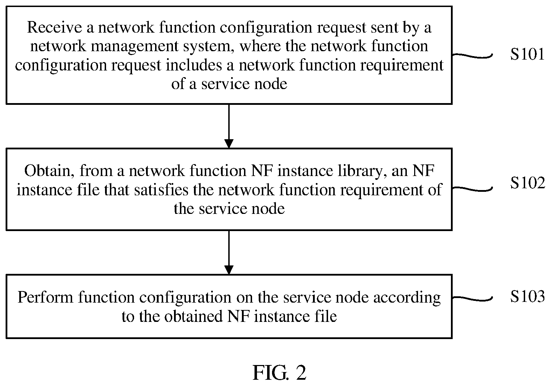

FIG 2 is a flowchart of a virtual network function configuration method according to an embodiment of the present invention. The solution is executed by the foregoing configuration manager. As shown in FIG 2, specific implementation steps of the virtual network function configuration method are as follows.

S101. Receive a network function configuration request sent by a network management system, where the network function configuration request includes a network function requirement of a service node.

The service node may be a service node that is newly added into a network, may be a service node that has been deployed in the network and that is processing a service, or may be one service node on a service chain or all nodes on an entire service chain.

Before this step, an NF instance library needs to be configured according to each service function and a pre-obtained image file of each acceleration device, where: the NF instance library includes an instance file for which each service function is based on each acceleration device; and optionally, the NF instance library may further include an NF description table. Each entry of the NF description table includes an instance descriptor, and the instance descriptor is used to describe an instance file for which each service function is based on each acceleration device. Alternatively, the NF description table may be stored at another location, and is accessed when an inquiry is needed. Each instance descriptor includes a function type and at least one of an acceleration device type, a throughput, a maximum capability, an average processing batch value, or device utilization.

Corresponding to the foregoing instance descriptor of each NF instance, the network function configuration request may include a function type of the service node and at least one of the following parameters: an acceleration device type, a throughput, a maximum capability, an average processing batch value, or device utilization.

The network function configuration request may include a network function requirement of one service node, or may include network function requirements of multiple service nodes.

S102. Obtain, from the network function NF instance library, an NF instance file that satisfies the network function requirement of the service node.

In this step, a specific implementation is as follows: The configuration manager obtains, from the NF description table according to the NF description table and the network function requirement of the service node, an NF description entry of an instance descriptor that satisfies the network function requirement of the service node; and then obtains, from instance files of the NF instance library according to the obtained NF description entry, the NF instance file that satisfies the network function requirement. The network function instance file in this solution refers to a program and a configuration file that implement the network function, or a program and a configuration file that implement different acceleration device functions and the network function.

When the network function configuration request includes network function requirements of multiple service nodes, NF instances that satisfy the network function requirements of each service node may be obtained one by one according to a sequence of the multiple service nodes, or NF instances that satisfy the network function requirements of each service node may be obtained simultaneously. After the NF instances that satisfy the network function requirements of each service node are obtained, a service chain may further be created according to the multiple NF instances.

S103. Perform function configuration on the service node according to the obtained NF instance file.

In this step, preferably, if the service node is a service node that has been deployed in a network, a service that is being processed by the service node is directed to a pre-configured failure protection data plane, and continues to be processed on the failure protection data plane. Network function configuration is re-performed on the service node according to the obtained NF instance file. After network function configuration for the service node is complete, the service on the failure protection data plane is redirected to the service node.

When the service node is located on a service chain, performing function configuration on the service node may be that a service on the service chain on which the service node is located is temporarily stopped, a new service chain is created according to the obtained NF instance file, and then the new service chain continues to process the temporarily stopped service.

Similarly, a service of each service node on the service chain may be directed to the pre-configured failure protection data plane, and is processed on the failure protection data plane. Each service node is reconfigured according to the obtained NF instance file that satisfies the network function requirement of each service node, to generate a new service chain. Then, the service on the failure protection data plane is redirected to the new service chain, to ensure that the service on the service chain is not interrupted in a whole process.

Optionally, the method further includes: sending a configuration response message to the network management system. The configuration response message is used to notify the network management system whether network function configuration for the service node is complete.

A function of the configuration response message is to notify the network management system, that is, a user, of a processing result of the network function configuration process. If an NF instance that totally satisfies the network function requirement of the network function configuration request is selected, and configuration is complete, a result of successful configuration is fed back. If an NF instance that totally satisfies requirement information in the network function configuration request is not selected, a result of failed configuration may be fed back to the network management system, or at least one implementation that is closest to the network function requirement may be fed back, so that the user can select a relatively appropriate configuration solution.

In the virtual network function configuration method provided in this embodiment, when the network function configuration request is received, an instance file for which network functions that use different acceleration devices is searched in the NF instance library according to the network function requirement of the service node in the network function configuration request, and network function configuration is performed on the service node according to the instance file. The service node may be a service node that is newly added into a network or a service node that has been deployed in a network and that processes a service. In the foregoing manner, the network function and dynamic configuration for an acceleration resource of the network function can be implemented according to the network function requirement of the network function configuration request, so that time of network acceleration resource configuration is effectively reduced, configuration efficiency is improved, and service interruption can be avoided.

Based on the foregoing embodiment, the following provides a specific implementation to describe in detail a virtual network function configuration method provided in the present invention.

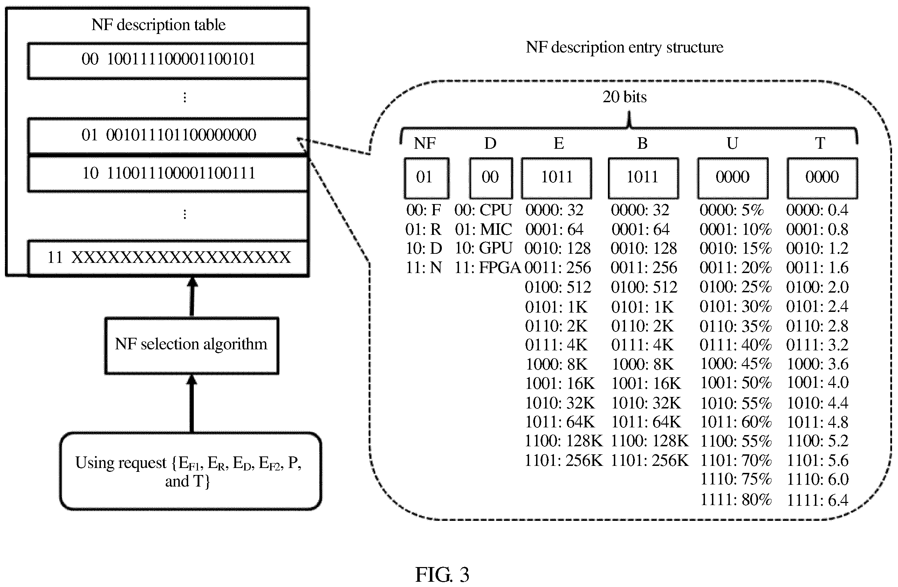

FIG 3 is a schematic structural diagram of an NF description table of a virtual network function configuration method according to an embodiment of the present invention. As shown in FIG 3, the NF description table includes multiple NF description entries. Each entry includes an instance descriptor (that is, a string of numbers in each entry in FIG 3). Each instance descriptor is obtained by performing coding on parameters of each NF instance. The parameters include an NF instance type NF, a device type D, a maximum capability E supported by the NF instance, an average processing batch value B, device utilization U, a throughput T, and the like. The maximum capability E may be a quantity of entries of a forwarding information base (English: forwarding information base, FIB for short), a quantity of firewall rules, or a quantity of DPI rules. The instance descriptor may be an integer, or may be a binary number shown in FIG 3. A code indicating the NF instance type is located on a most significant bit (which may be one or more bits) of each instance descriptor. The NF description table may include multiple sub-tables. In the instance descriptors of each sub-table, codes that are used to indicate instance types are the same, that is, instance descriptors of NFs of the same type are stored in the same sub-table.

In FIG 3, there are four NF instance types in total: a firewall (denoted as F), routing (routing, denoted as R), DPI (denoted as D), and network address translation (English: Network Address Translation, NAT for short, denoted as N). A quantity of description tables of N depends on an NF with a largest quantity of instances. For example, if a system has 32 Routing instances, 16 DPI instances, 12 Firewall instances, and 7 NAT instances, the quantity of the NF description tables of the system is 4 x 32 = 128, where 4 indicates a quantity of instances supported by the system.

A configuration manager is responsible for generation of a high-performance data plane and configuration for a failure protection data plane, and controls traffic routing between a software instance and a hardware acceleration instance. For each NF configuration request, the configuration manager accesses the NF description table, and selects an appropriate NF instance to constitute a high-performance data plane that satisfies a requirement. For example, when the NF configuration request includes network function requirements of multiple service nodes on a service chain, the configuration manager needs to first select all NFs of the service chain, for example, E_{F1}, E_{R}, E_{D}, and E_{F2} in FIG 1, to indicate that traffic needs to successively pass through the Firewall1, the Routing, the DPI, and the Firewall2 that are on the service chain. Therefore, the configuration manager needs to find the foregoing four network functions. In addition, the configuration manager needs to ensure that the selected NFs can satisfy a target throughput (throughput, denoted as T), to support maximum peak traffic, that is, a peak data volume (peak, denoted as P). Finally, to select appropriate NFs, the configuration manager needs to comprehensively evaluate all input parameters.

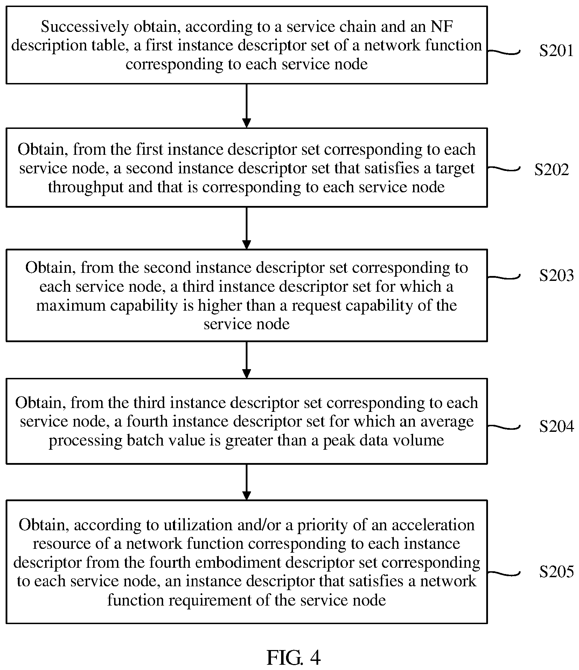

FIG 4 is a flowchart of selecting an NF instance that conforms to a network function requirement in a virtual network function configuration method according to an embodiment of the present invention. As shown in FIG 4, when a service node is located on a service chain, and the network function configuration request includes a network function requirement of each service node on the service chain, and a target throughput of a service chain and a peak data volume that are of the service chain. That is, the configuration request includes (E_{F1}, E_{R}, E_{D}, E_{F2}, P, and T), and the network function requirements of each service node include a request capability of the service node. A specific procedure of successively obtaining, according to the NF description table and the network function requirements of each service node from the NF description table, an instance descriptor that satisfies the a network function requirement of each service node on the service chain is as follows.

S201. Successively obtain, according to the service chain and the NF description table, a first instance descriptor set of a network function corresponding to each service node.

In the solution, first each NF sub-table is successively read according to the network functions of each node on the service chain, and an instance descriptor that is consistent with the network functions of each service node (that is, an NF type of the network function requirement is satisfied) is obtained to constitute the foregoing first instance descriptor set.

S202. Obtain, from the first instance descriptor set corresponding to each service node, a second instance descriptor set that satisfies the target throughput and that is corresponding to each service node.

In this step, for each service node, the first instance descriptor set corresponding to the service node is retrieved by using a halving method, to obtain the second instance descriptor set that satisfies the target throughput. In the solution, because each service node belongs to the same service chain, and continuously processes the same service, requirements for a throughput are generally consistent. Therefore, the first instance descriptor set corresponding to each service node may be retrieved by using the same target throughput.

Further, in a sub-table of the foregoing second instance descriptor set, a throughput field T is retrieved by using a halving method, and instance descriptors that satisfy the target throughput (the satisfaction herein is not limited to be totally equal, and may be within a range of 20% around the target throughput, where 20% is a set value and may be adjusted according to an actual case) are obtained to constitute the second instance descriptor set.

S203. Obtain, from the second instance descriptor set corresponding to each service node, a third instance descriptor set for which a maximum capability is higher than the request capability of the service node.

In this step, the third instance descriptor set for which the maximum capability is higher than the request capability is obtained from the second instance descriptor set. This means that for each service node, an instance descriptor for which a value of a capability field E is higher than a value of the request capability is retrieved according to the request capability of the service node based on the foregoing selected second instance descriptor set, to constitute the third instance descriptor set corresponding to the service node.

S204. Obtain, from the third instance descriptor set corresponding to each service node, a fourth instance descriptor set for which an average processing batch value is greater than the peak data volume.

In this step, the fourth instance descriptor set for which the average processing batch value is greater than the peak data volume is obtained according to the peak data volume from the third instance descriptor set corresponding to each service node. Likewise, because each service node belongs to the same service chain, and continuously processes the same service, requirements for a peak data volume are generally consistent. Therefore, the third instance descriptor set corresponding to each service node may be retrieved by using the same peak data volume.

That is, an instance descriptor for which a batch value B is greater than the peak data volume is selected according to the peak data volume P of the network function configuration request based on the foregoing selected third instance descriptor set, to constitute the fourth instance descriptor set.

S205. Obtain, according to utilization and/or a priority of an acceleration resource of a network function corresponding to each instance descriptor from the fourth instance descriptor set corresponding to each service node, an instance descriptor that satisfies the network function requirement of the service node.

Further, an accelerator type D (such as a CPU, a GPU, and an FPGA) and utilization U are selected based on the fourth instance descriptor set selected in step S204. If an appropriate NF description entry can be selected, that selection is complete is fed back. If there is no appropriate NF description entry, that selection is not complete is fed back, and the closest NF description entry is fed back. The appropriateness herein is that an acceleration device having low utilization is preferentially selected, or an acceleration device having the best acceleration effect for each network function is selected according to a preset priority sequence of acceleration devices for each network function.

After the instance descriptor is selected, the configuration manager accesses the NF instance library, obtains an NF instance file according to the selected instance descriptor, and creates a high-performance data plane according to the NF instance file. In the configuration process, routing further needs to be configured, so that acceleration devices (also referred to as accelerators) communicate by using a RAM (for example, when a packet needs to pass through multiple accelerators), while same acceleration devices can communicate directly, without the need to pass through the RAM (for example, the RAM does not need to be accessed to implement routing and DPI in the same accelerator, GPU, in FIG 1). Finally, for online reconfiguration on demand, the configuration manager needs to generate a failure protection data plane (which is in a one-to-one correspondence with the high-performance data plane). In a specific configuration process, a service of each service node on the service chain is directed to the pre-configured failure protection data plane for continuous execution. Each service node is reconfigured according to the obtained NF instance file that satisfies the network function requirement of each service node, to generate a new service chain. The service on the failure protection data plane is redirected to the new service chain for execution, to complete network function configuration.

In a specific configuration method provided in this embodiment, based on the architecture shown in FIG 1, configuration for a single NF service node may be supported. Configuration for one or more service nodes on a service chain constituted by multiple NFs may also be supported, and each node uses a specified acceleration device, so as to improve NF performance.

The system can support elastic extension, and an NF instance and an accelerator can be added according to needs. When a new NF instance is added, the NF instance needs to be added to the NF instance library only, and a corresponding entry is added to the NF descriptor table. When a new NF configuration request arrives, the configuration manager selects an NF instance, and configures the NF instance. In a reconfiguration process, the configuration manager for the NFs redirects traffic to the failure protection data plane. When reconfiguration is complete, the configuration manager redirects the traffic to the high-performance data plane, to implement online network function configuration on demand.

In addition, a service is not interrupted when a network function and an acceleration device are configured by using the foregoing method. In a process of selecting a new network function instance, no complex optimization algorithm is needed. Based on a multi-layer matching method, an appropriate NF instance can be quickly and efficiently selected. Acceleration device selection and configuration can be completed automatically in a whole process, so that time and effort are reduced.

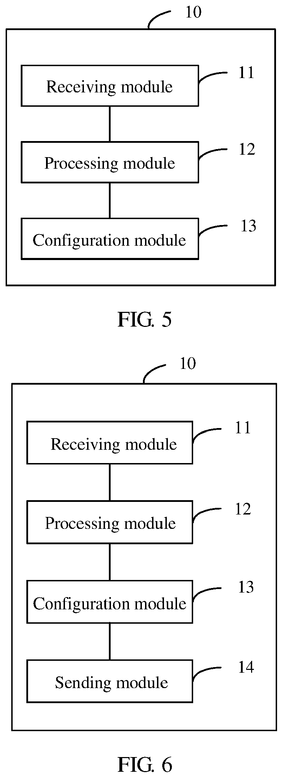

FIG 5 is a schematic structural diagram of a virtual network function configuration apparatus according to an embodiment of the present invention. As shown in FIG 5, the virtual network function configuration apparatus 10 specifically includes:
a receiving module 11, configured to receive a network function configuration request sent by a network management system, where the network function configuration request includes a network function requirement of a service node;
a processing module 12, configured to obtain, from a network function NF instance library, an NF instance file that satisfies the network function requirement of the service node, where the NF instance library includes an instance file for which each service function is based on each acceleration device; and
a configuration module 13, configured to perform network function configuration on the service node according to the obtained NF instance file.

The virtual network function configuration apparatus provided in this embodiment is configured to execute the technical solutions of the foregoing method embodiment, and an implementation principle and a technical effect of the apparatus are similar to those of the technical solutions. When the receiving module receives the network function configuration request, the processing module searches the NF instance library for the instance file that satisfies the requirement of the request, and then performs network function configuration on one or more service nodes or a separate service node on the service chain, to implement the network function and dynamic configuration for an acceleration resource of the network function. Therefore, time of network acceleration resource configuration is effectively reduced, and configuration efficiency is improved.

Based on the foregoing embodiment, the processing module 12 is further configured to configure the NF instance library according to each service function and a pre-obtained image file of each acceleration device, where the NF instance library further includes an NF description table, each entry of the NF description table includes an instance descriptor, and the instance descriptor is used to describe an instance file for which one service function is based on one acceleration device; and
the instance descriptor includes a function type and at least one of the following parameters: an acceleration device type, a throughput, a maximum capability, an average processing batch value, or device utilization.

Optionally, the network function requirement received by the receiving module 11 includes at least one of a target throughput, a request capability, or a peak data volume.

Further, the processing module 12 is specifically configured to:
obtain, from the NF description table, an NF description entry including an instance descriptor that satisfies the network function requirement; and
obtain, from instance files of the NF instance library according to the obtained NF description entry, the NF instance file that satisfies the network function requirement.

Optionally, when the service node is located on a service chain, the network function configuration request includes a network function requirement of each service node on the service chain and a target throughput and a peak data volume that are of the service chain, the network function requirements of each service node include a request capability of the service node, and the processing module 12 is further configured to:
successively obtain, according to the service chain and the NF description table, a first instance descriptor set of a network function corresponding to each service node;
obtain, from the first instance descriptor set corresponding to each service node, a second instance descriptor set that satisfies the target throughput and that is corresponding to each service node;
obtain, from the second instance descriptor set corresponding to each service node, a third instance descriptor set for which a maximum capability is higher than the request capability of the service node;
obtain, from the third instance descriptor set corresponding to each service node, a fourth instance descriptor set for which an average processing batch value is greater than the peak data volume; and
obtain, according to utilization and/or a priority of an acceleration resource of a network function corresponding to each instance descriptor from the fourth instance descriptor set corresponding to each service node, an instance descriptor that satisfies the network function requirement of the service node.

Optionally, the configuration module 13 is specifically configured to:
direct a service that is being processed by the service node to a pre-configured failure protection data plane, where the service continues to be executed on the failure protection data plane;
re-perform network function configuration on the service node according to the obtained NF instance file that satisfies the network function requirement of the service node; and
redirect the service on the failure protection data plane to the service node after network function configuration for the service node is complete.

Optionally, when the service node is located on the service chain, the configuration module 13 is further configured to:
direct a service of each service node on the service chain to a pre-configured failure protection data plane, where the service continues to be processed on the failure protection data plane;
reconfigure each service node on the service chain according to the obtained NF instance file that satisfies the network function requirement of each service node, to generate a new service chain; and
redirect the service on the failure protection data plane to the new service chain.

In this solution, the configuration module may switch execution for a service node or a service chain that is being performed to the failure protection data plane, and switch the execution back after configuration is complete, and therefore, service interruption can be avoided during a configuration process.

The virtual network function configuration apparatus provided in this embodiment is configured to execute the technical solutions of the foregoing method embodiment. An implementation principle and a technical effect of the apparatus are similar to those of the technical solutions, and details are not described herein again.

FIG 6 is a schematic structural diagram of another virtual network function configuration apparatus according to an embodiment of the present invention. As shown in FIG 6, based on the foregoing embodiment, the virtual network function configuration apparatus 10 further includes:
a sending module 14, configured to send a configuration response message to the network management system, where the configuration response message is used to notify the network management system whether network function configuration is complete.

The virtual network function configuration apparatus provided in this embodiment is configured to execute the technical solutions of the foregoing method embodiment. An implementation principle and a technical effect of the apparatus are similar to those of the technical solutions, and details are not described herein again.

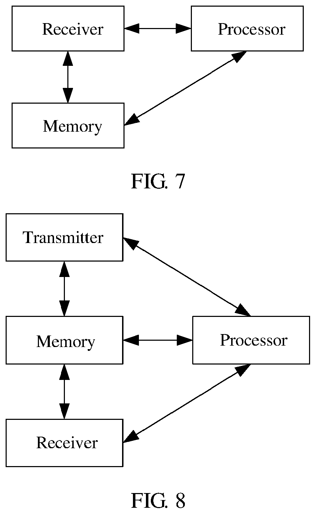

FIG 7 is a schematic structural diagram of a configuration manager according to an embodiment of the present disclosure. As shown in FIG 7, the configuration manager is specifically implemented as a receiver, a processor, and a memory that is configured to store cache content such as a program, where
the receiver is configured to receive a network function configuration request sent by a network management system, where the network function configuration request includes a network function requirement of a service node;
the processor is configured to obtain, from a network function NF instance library, an NF instance file that satisfies the network function requirement of the service node, where the NF instance library includes an instance file for which each service function is based on each acceleration device; and
the processor is further configured to perform function configuration on the service node according to the obtained NF instance file.

Further, the processor is further configured to configure the NF instance library according to each service function and a pre-obtained image file of each acceleration device, where the NF instance library further includes an NF description table, each entry of the NF description table includes an instance descriptor, and the instance descriptor is used to describe an instance file for which one service function is based on one acceleration device; and
the instance descriptor includes a function type and at least one of the following parameters: an acceleration device type, a throughput, a maximum capability, an average processing batch value, or device utilization.

The network function requirement received by the receiver includes at least one of a target throughput, a request capability, or a peak data volume.

Further, the processor is specifically configured to:
obtain, from the NF description table, an NF description entry including an instance descriptor that satisfies the network function requirement; and
obtain, from instance files of the NF instance library according to the obtained NF description entry, the NF instance file that satisfies the network function requirement.

Further, when the service node is located on a service chain, the network function configuration request includes a network function requirement of each service node on the service chain and a target throughput and a peak data volume that are of the service chain, the network function requirements of each service node include a request capability of the service node, and the processor is further configured to:
successively obtain, according to the service chain and the NF description table, a first instance descriptor set of a network function corresponding to each service node;
obtain, from the first instance descriptor set corresponding to each service node, a second instance descriptor set that satisfies the target throughput and that is corresponding to each service node;
obtain, from the second instance descriptor set corresponding to each service node, a third instance descriptor set for which a maximum capability is higher than the request capability of the service node;
obtain, from the third instance descriptor set corresponding to each service node, a fourth instance descriptor set for which an average processing batch value is greater than the peak data volume; and
obtain, according to utilization and/or a priority of an acceleration resource of a network function corresponding to each instance descriptor from the fourth instance descriptor set corresponding to each service node, an instance descriptor that satisfies the network function requirement of the service node.

Further, the processor is specifically configured to:
direct a service that is being processed by the service node to a pre-configured failure protection data plane, where the service continues to be executed on the failure protection data plane;
re-perform network function configuration on the service node according to the obtained NF instance file that satisfies the network function requirement of the service node; and
redirect the service on the failure protection data plane to the service node after network function configuration for the service node is complete.

Optionally, when the service node is located on the service chain, the processor is further configured to:
direct a service of each service node on the service chain to a pre-configured failure protection data plane, where the service continues to be processed on the failure protection data plane;
reconfigure each service node on the service chain according to the obtained NF instance file that satisfies the network function requirement of each service node, to generate a new service chain; and
redirect the service on the failure protection data plane to the new service chain.

The configuration manager provided in this embodiment may be configured to execute the technical solutions of the foregoing method embodiment. An implementation principle and a technical effect of the apparatus are similar to those of the technical solutions, and details are not described herein again.

FIG 8 is a schematic structural diagram of another configuration manager according to an embodiment of the present disclosure. As shown in FIG 8, the configuration manager further includes:
a transmitter, configured to send a configuration response message to the network management system, where the configuration response message is used to notify the network management system whether network function configuration is complete.

The configuration manager provided in this embodiment may be configured to execute the technical solutions of the foregoing method embodiment. An implementation principle and a technical effect of the apparatus are similar to those of the technical solutions, and details are not described herein again.

It should be understood that in the foregoing configuration manager embodiments, the processor may be a central processing unit (English: central processing unit, CPU for short), or may be another general purpose processor, a digital signal processor (English: digital signal processor, DSP for short), an application-specific integrated circuit (English: application-specific integrated circuit, ASIC for short), or the like. The general purpose processor may be a microprocessor, any normal processor, or the like, and the foregoing memory may be a read-only memory (English: read-only memory, ROM for short), a RAM, a flash memory, a hard disk, or a solid hard disk. The steps of the method disclosed with reference to the embodiments of the present invention may be directly performed by a hardware processor, or may be performed by using a combination of hardware in the processor and a software module.

## Claims

1. A virtual network function configuration method, comprising:
receiving (S101) a network function configuration request sent by a network management system, wherein the network function configuration request comprises network function requirements of multiple service nodes in a service chain;
obtaining (S102), from a network function, NF, instance library, NF instance files that satisfy the network function requirements of the multiple service nodes in the service chain, wherein the NF instance library comprises instance files that satisfy the network function requirements of the multiple service nodes in the service chain, and each instance file is related to a network function based on an acceleration device; and
performing (S103) network function configuration on the multiple service nodes in the service chain according to the obtained NF instance files.

2. The method according to claim 1, wherein the NF instance library further comprises an NF description table, each entry of the NF description table comprises an instance descriptor, and the instance descriptor is used to describe an instance file for which one network function is based on one acceleration device; and
the instance descriptor comprises a function type and at least one of the following parameters: a throughput, a maximum capability, an average processing batch value, or device utilization.

3. The method according to claim 2, wherein the network function requirements comprise at least one of a target throughput, a request capability, or a peak data volume.

4. The method according to claim 2 or 3, wherein the obtaining, from a NF instance library, NF instance files that satisfy the network function requirements of the service nodes comprises:
obtaining, from the NF description table, an NF description entry comprising an instance descriptor that satisfies the network function requirements; and
obtaining, from instance files of the NF instance library according to the obtained NF description entry, the NF instance files that satisfy the network function requirements.

5. The method according to claim 4, wherein when the service nodes are located on a service chain, the network function configuration request comprises a network function requirement of each service node on the service chain and a target throughput and a peak data volume that are of the service chain, the network function requirement of each service node comprises a request capability of the service node, and the method further comprises:
successively obtaining, according to the service chain and the NF description table, a first instance descriptor set of a network function corresponding to each service node;
obtaining, from the first instance descriptor set corresponding to each service node, a second instance descriptor set that satisfies the target throughput and that is corresponding to each service node;
obtaining, from the second instance descriptor set corresponding to each service node, a third instance descriptor set for which a maximum capability is higher than the request capability of the service node;
obtaining, from the third instance descriptor set corresponding to each service node, a fourth instance descriptor set for which an average processing batch value is greater than the peak data volume; and
obtaining, according to utilization and/or a priority of an acceleration resource of a network function corresponding to each instance descriptor from the fourth instance descriptor set corresponding to each service node, an instance descriptor that satisfies the network function requirement of the service node; and
when the service node is located on the service chain, the performing network function configuration on the service node according to the obtained NF instance files comprises:
directing a service of each service node on the service chain to a pre-configured failure protection data plane, wherein the service continues to be processed on the failure protection data plane;
reconfiguring each service node on the service chain according to the obtained NF instance files that satisfy the network function requirement of each service node, to generate a new service chain; and
redirecting the service on the failure protection data plane to the new service chain.

6. The method according to any one of claims 1 to 4, wherein the NF instance files each comprise a program and a configuration file that implement a corresponding network function.

7. The method according to any one of claims 1 to 6, wherein before the receiving a network function configuration request, the method further comprises:
configuring the NF instance library according to each network function and a pre-obtained image file of each acceleration device.

8. A computer program product comprising instructions which, when the program is executed by a computer, cause the computer to carry out the steps of the method of any one of claims 1 to 7.

9. A virtual network function configuration apparatus, the apparatus configured to:
receive (S101) a network function configuration request sent by a network management system, wherein the network function configuration request comprises network function requirements of multiple service nodes in a service chain;
obtain (S102), from a network function, NF, instance library, NF instance files that satisfy the network function requirements of the multiple service nodes in the service chain, wherein the NF instance library comprises an instance file for which one network function is based on one acceleration device; and
perform (S103) network function configuration on the multiple service nodes in the service chain according to the obtained NF instance files.

10. The apparatus according to claim 9, further configured to configure the NF instance library according to each network function and a pre-obtained image file of each acceleration device, wherein the NF instance library further comprises an NF description table, each entry of the NF description table comprises an instance descriptor, and the instance descriptor is used to describe an instance file for which one network function is based on one acceleration device; and
the instance descriptor comprises a function type and at least one of the following parameters: a throughput, a maximum capability, an average processing batch value, or device utilization.

11. The apparatus according to claim 9 or 10, wherein the network function requirements comprise at least one of a target throughput, a request capability, or a peak data volume.

12. The apparatus according to claim 10 or 11, specifically configured to:
obtain, from the NF description table, an NF description entry comprising an instance descriptor that satisfies the network function requirements; and
obtain, from instance files of the NF instance library according to the obtained NF description entry, the NF instance files that satisfy the network function requirements.

13. The apparatus according to claim 12, wherein the service nodes are located on a service chain, the network function configuration request comprises a network function requirement of each service node on the service chain and a target throughput and a peak data volume that are of the service chain, the network function requirement of each service node comprises a request capability of the service node, and further configured to:
successively obtain, according to the service chain and the NF description table, a first instance descriptor set of a network function corresponding to each service node;
obtain, from the first instance descriptor set corresponding to each service node, a second instance descriptor set that satisfies the target throughput and that is corresponding to each service node;
obtain, from the second instance descriptor set corresponding to each service node, a third instance descriptor set for which a maximum capability is higher than the request capability of the service node;
obtain, from the third instance descriptor set corresponding to each service node, a fourth instance descriptor set for which an average processing batch value is greater than the peak data volume; and
obtain, according to utilization and/or a priority of an acceleration resource of a network function corresponding to each instance descriptor from the fourth instance descriptor set corresponding to each service node, an instance descriptor that satisfies the network function requirement of the service node.

14. The apparatus according to any one of claims 9 to 12, specifically configured to:
direct a service that is being processed by the service nodes to a pre-configured failure protection data plane, wherein the service continues to be executed on the failure protection data plane;
re-perform network function configuration on the service nodes according to the obtained NF instance files that satisfy the network function requirements of the service nodes; and
redirect the service on the failure protection data plane to the service nodes after network function configuration for the service nodes is complete.

15. The apparatus according to any one of claims 9 to 14, wherein the NF instance files each comprise a program and a configuration file that implement a corresponding network function.

## Patentansprüche

1. Verfahren zur Konfiguration einer virtuellen Netzwerkfunktion, umfassend:
Empfangen (S101) einer von einem Netzwerkmanagementsystem gesendeten Netzwerkfunktionskonfigurationsanfrage, wobei die Netzwerkfunktionskonfigurationsanfrage Netzwerkfunktionsanforderungen mehrerer Dienstknoten in einer Dienstkette umfasst;
Erhalten (S102), von einer Netzwerkfunktionsinstanzbibliothek, NF-Instanzbibliothek, von NF-Instanzdateien, die den Netzwerkfunktionsanforderungen der mehreren Dienstknoten in der Dienstkette genügen, wobei die NF-Instanzbibliothek Instanzdateien umfasst, die den Netzwerkfunktionsanforderungen der mehreren Dienstknoten in der Dienstkette genügen und sich jede Instanzdatei auf eine Netzwerkfunktion bezieht, die auf einer Beschleunigungseinrichtung basiert; und
Durchführen (S103) der Netzwerkfunktionskonfiguration an den mehreren Dienstknoten in der Dienstkette entsprechend den erhaltenen NF-Instanzdateien.

2. Verfahren nach Anspruch 1, wobei die NF-Instanzbibliothek ferner eine NF-Beschreibungstabelle umfasst, jeder Eintrag der NF-Beschreibungstabelle einen Instanzdeskriptor umfasst und der Instanzdeskriptor verwendet wird, um eine Instanzdatei zu beschreiben, für die eine Netzwerkfunktion auf einer Beschleunigungseinrichtung basiert; und
der Instanzdeskriptor einen Funktionstyp und mindestens einen der folgenden Parameter umfasst: einen Durchsatz, ein maximales Leistungsvermögen, einen durchschnittlichen Stapelverarbeitungswert oder eine Einrichtungsauslastung.

3. Verfahren nach Anspruch 2, wobei die Netzwerkfunktionsanforderungen mindestens eines von einem Zieldurchsatz, einem geforderten Leistungsvermögen oder einem Peak-Datenvolumen umfassen.

4. Verfahren nach Anspruch 2 oder 3, wobei das Erhalten, von einer NF-Instanzbibliothek, von NF-Instanzdateien, die den Netzwerkfunktionsanforderungen der Dienstknoten genügen, Folgendes umfasst:
Erhalten, aus der NF-Beschreibungstabelle, eines NF-Beschreibungseintrags, umfassend einen Instanzdeskriptor, der den Netzwerkfunktionsanforderungen genügt; und
Erhalten, von Instanzdateien der NF-Instanzbibliothek entsprechend dem erhaltenen NF-Beschreibungseintrag, der NF-Instanzdateien, die den Netzwerkfunktionsanforderungen genügen.

5. Verfahren nach Anspruch 4, wobei, wenn die Dienstknoten an einer Dienstkette positioniert sind, die Netzwerkfunktionskonfigurationsanfrage eine Netzwerkfunktionsanforderung für jeden Dienstknoten an der Dienstkette und einen Zieldurchsatz und ein Peak-Datenvolumen, die sich auf die Dienstkette beziehen, umfasst, die Netzwerkfunktionsanforderung jedes Dienstknotens ein gefordertes Leistungsvermögen des Dienstknotens umfasst und das Verfahren ferner Folgendes umfasst:
aufeinanderfolgendes Erhalten, entsprechend der Dienstkette und der NF-Beschreibungstabelle, einer ersten Instanzdeskriptorgruppe einer Netzwerkfunktion, die jedem Dienstknoten entspricht;
Erhalten, aus der ersten Instanzdeskriptorgruppe, die jedem Dienstknoten entspricht, einer zweiten Instanzdeskriptorgruppe, die dem Zieldurchsatz genügt und die jedem Dienstknoten entspricht;
Erhalten, aus der zweiten Instanzdeskriptorgruppe, die jedem Dienstknoten entspricht, einer dritten Instanzdeskriptorgruppe, für die ein maximales Leistungsvermögen höher ist als das geforderte Leistungsvermögen des Dienstknotens;
Erhalten, aus der dritten Instanzdeskriptorgruppe, die jedem Dienstknoten entspricht, einer vierten Instanzdeskriptorgruppe, für die ein durchschnittlicher Stapelverarbeitungswert größer ist als das Peak-Datenvolumen; und
Erhalten, entsprechend einer Auslastung und/oder einer Priorität einer Beschleunigungsressource einer Netzwerkfunktion entsprechend jedem Instanzdeskriptor aus der vierten Instanzdeskriptorgruppe, der jedem Dienstknoten entspricht, eines Instanzdeskriptors, der der Netzwerkfunktionsanforderung des Dienstknotens genügt; und
wenn der Dienstknoten an der Dienstkette positioniert ist, das Durchführen der Netzwerkfunktionskonfiguration an dem Dienstknoten entsprechend den erhaltenen NF-Instanzdateien Folgendes umfasst:
Leiten eines Dienstes jedes Dienstknotens an der Dienstkette zu einer voreingestellten Fehlerschutz-Datenebene, wobei die Verarbeitung des Dienstes auf der Fehlerschutz-Datenebene fortgesetzt wird;
Neukonfigurieren jedes Dienstknotens an der Dienstkette entsprechend den erhaltenen NF-Instanzdateien, die der Netzwerkfunktionsanforderung jedes Dienstknotens genügen, um eine neue Dienstkette zu erzeugen; und
Umleiten des Dienstes auf der Fehlerschutz-Datenebene zu der neuen Dienstkette.

6. Verfahren nach einem der Ansprüche 1 bis 4, wobei die NF-Instanzdateien jeweils ein Programm und eine Konfigurationsdatei umfassen, die eine entsprechende Netzwerkfunktion implementieren.

7. Verfahren nach einem der Ansprüche 1 bis 6, wobei das Verfahren vor dem Empfangen einer Netzwerkfunktionskonfigurationsanfrage ferner Folgendes umfasst:
Einrichten der NF-Instanzbibliothek entsprechend jeder Netzwerkfunktion und einer zuvor erhaltenen Bilddatei jeder Beschleunigungseinrichtung.

8. Computerprogrammprodukt, umfassend Anweisungen, die bei Ausführung des Programms durch einen Computer den Computer zum Durchführen der Schritte des Verfahrens nach einem der Ansprüche 1 bis 7 veranlassen.

9. Virtuelle Netzwerkfunktionskonfigurationsvorrichtung, wobei die Vorrichtung ausgelegt ist zum
Empfangen (S101) einer von einem Netzwerkmanagementsystem gesendeten Netzwerkfunktionskonfigurationsanfrage, wobei die Netzwerkfunktionskonfigurationsanfrage Netzwerkfunktionsanforderungen mehrerer Dienstknoten in einer Dienstkette umfasst;
Erhalten (S 102), von einer Netzwerkfunktionsinstanzbibliothek, NF-Instanzbibliothek, von NF-Instanzdateien, die den Netzwerkfunktionsanforderungen der mehreren Dienstknoten in der Dienstkette genügen, wobei die NF-Instanzbibliothek eine Instanzdatei umfasst, für die eine Netzwerkfunktion auf einer Beschleunigungseinrichtung basiert; und
Durchführen (S103) einer Netzwerkfunktionskonfiguration an den mehreren Dienstknoten in der Dienstkette entsprechend den erhaltenen NF-Instanzdateien.

10. Vorrichtung nach Anspruch 9, ferner ausgelegt zum Einrichten der NF-Instanzbibliothek entsprechend jeder Netzwerkfunktion und einer zuvor erhaltenen Bilddatei jeder Beschleunigungseinrichtung, wobei die NF-Instanzbibliothek ferner eine NF-Beschreibungstabelle umfasst, jeder Eintrag der NF-Beschreibungstabelle einen Instanzdeskriptor umfasst und der Instanzdeskriptor verwendet wird, um eine Instanzdatei zu beschreiben, für die eine Netzwerkfunktion auf einer Beschleunigungseinrichtung basiert; und
der Instanzdeskriptor einen Funktionstyp und mindestens einen der folgenden Parameter umfasst: einen Durchsatz, ein maximales Leistungsvermögen, einen durchschnittlichen Stapelverarbeitungswert oder eine Einrichtungsauslastung.

11. Vorrichtung nach Anspruch 9 oder 10, wobei die Netzwerkfunktionsanforderungen mindestens eines von einem Zieldurchsatz, einem geforderten Leistungsvermögen oder einem Peak-Datenvolumen umfassen.

12. Vorrichtung nach Anspruch 10 oder 11, im Einzelnen ausgelegt zum
Erhalten, aus der NF-Beschreibungstabelle, eines NF-Beschreibungseintrags, der einen Instanzdeskriptor umfasst, der den Netzwerkfunktionsanforderungen genügt; und
Erhalten, aus Instanzdateien der NF-Instanzbibliothek entsprechend dem erhaltenen NF-Beschreibungseintrag, der NF-Instanzdateien, die den Netzwerkfunktionsanforderungen genügen.

13. Vorrichtung nach Anspruch 12, wobei die Dienstknoten an einer Dienstkette positioniert sind, die Netzwerkfunktionskonfigurationsanfrage eine Netzwerkfunktionsanforderung jedes Dienstknotens an der Dienstkette und einen Zieldurchsatz und ein Peak-Datenvolumen umfasst, die für die Dienstkette gelten, die Netzwerkfunktionsanforderung jedes Dienstknotens ein gefordertes Leistungsvermögen des Dienstknotens umfasst und die Vorrichtung ferner ausgelegt ist zum
aufeinanderfolgenden Erhalten, entsprechend der Dienstkette und der NF-Beschreibungstabelle, einer ersten Instanzdeskriptorgruppe einer Netzwerkfunktion, die jedem Dienstknoten entspricht;
Erhalten, aus der ersten Instanzdeskriptorgruppe, die jedem Dienstknoten entspricht, einer zweiten Instanzdeskriptorgruppe, die dem Zieldurchsatz genügt und die jedem Dienstknoten entspricht;
Erhalten, aus der zweiten Instanzdeskriptorgruppe, die jedem Dienstknoten entspricht, einer dritten Instanzdeskriptorgruppe, für die ein maximales Leistungsvermögen höher ist als das geforderte Leistungsvermögen des Dienstknotens;
Erhalten, aus der dritten Instanzdeskriptorgruppe, die jedem Dienstknoten entspricht, einer vierten Instanzdeskriptorgruppe, für die ein durchschnittlicher Stapelverarbeitungswert größer ist als das Peak-Datenvolumen; und
Erhalten, entsprechend einer Auslastung und/oder einer Priorität einer Beschleunigungsressource einer Netzwerkfunktion entsprechend jedem Instanzdeskriptor aus der vierten Instanzdeskriptorgruppe, der jedem Dienstknoten entspricht, eines Instanzdeskriptors, der der Netzwerkfunktionsanforderung des Dienstknotens genügt.

14. Vorrichtung nach einem der Ansprüche 9 bis 12, im Einzelnen ausgelegt zum Leiten eines durch die Dienstknoten verarbeiteten Dienstes zu einer voreingestellten Fehlerschutz-Datenebene, wobei die Ausführung des Dienstes auf der Fehlerschutz-Datenebene fortgesetzt wird;
erneuten Durchführen der Netzwerkfunktionskonfiguration an den Dienstknoten entsprechend den erhaltenen NF-Instanzdateien, die den Netzwerkfunktionsanforderungen der Dienstknoten genügen; und
Umleiten des Dienstes auf der Fehlerschutz-Datenebene zu den Dienstknoten, nachdem die Netzwerkfunktionskonfiguration für die Dienstknoten abgeschlossen ist.

15. Vorrichtung nach einem der Ansprüche 9 bis 14, wobei die NF-Instanzdateien jeweils ein Programm und eine Konfigurationsdatei umfassen, die eine entsprechende Netzwerkfunktion implementieren.

## Revendications

1. Procédé de configuration de fonction de réseau virtuel, comprenant :
la réception (S101) d'une demande de configuration de fonction de réseau envoyée par un système de gestion de réseau, la demande de configuration de fonction de réseau comprenant des exigences de fonction de réseau de multiples noeuds de service dans une chaîne de services ;
l'obtention (S 102), à partir d'une bibliothèque d'instances de fonctions de réseau, NF, de fichiers d'instances de NF qui satisfont les exigences de fonction de réseau des multiples noeuds de service dans la chaîne de services, dans lequel la bibliothèque d'instances de NF comprend des fichiers d'instances qui satisfont les exigences de fonction de réseau des multiples noeuds de service de la chaîne de services, et chaque fichier d'instance se rapporte à une fonction de réseau basée sur un dispositif d'accélération ; et
la réalisation (S103) de la configuration de fonction de réseau sur les multiples noeuds de service dans la chaîne de services en fonction des fichiers d'instances de NF obtenus.

2. Procédé selon la revendication 1, dans lequel la bibliothèque d'instances de NF comprend en outre une table de descriptions de NF, chaque entrée de la table de descriptions de NF comprend un descripteur d'instance, et le descripteur d'instance sert à décrire un fichier d'instance pour lequel une fonction de réseau est basée sur un dispositif d'accélération ; et
le descripteur d'instance comprend un type de fonction et au moins un des paramètres suivants : un débit, une capacité maximale, une valeur de lot de traitement moyenne ou une utilisation de dispositif.

3. Procédé selon la revendication 2, dans lequel les exigences de fonction de réseau comprennent au moins l'un parmi un débit cible, une capacité de demande ou un volume de données maximum.

4. Procédé selon la revendication 2 ou 3, dans lequel l'obtention, à partir d'une bibliothèque d'instances de NF, de fichiers d'instances de NF qui satisfont les exigences de fonction de réseau des noeuds de service comprend :
l'obtention, à partir de la table de descriptions de NF, d'une entrée de description de NF comprenant un descripteur d'instance satisfaisant les exigences de fonction de réseau ; et
l'obtention, à partir des fichiers d'instance de la bibliothèque d'instances de NF en fonction de l'entrée de description de NF obtenue, des fichiers d'instances de NF qui satisfont les exigences de fonction réseau.

5. Procédé selon la revendication 4, lorsque les noeuds de service sont situés sur une chaîne de services, la demande de configuration de fonction de réseau comprenant une exigence de fonction de réseau de chaque noeud de service sur la chaîne de services ainsi qu'un débit cible et un volume de données maximum se rapportant à la chaîne de services, l'exigence de fonction de réseau de chaque noeud de service comprenant une capacité de demande du noeud de service, et le procédé comprenant en outre :
successivement, l'obtention, en fonction de la chaîne de services et de la table de descriptions de NF, d'un premier ensemble de descripteurs d'instances d'une fonction de réseau correspondant à chaque noeud de service ;
l'obtention, à partir du premier ensemble de descripteurs d'instances correspondant à chaque noeud de service, d'un deuxième ensemble de descripteurs d'instances qui satisfait le débit cible et qui correspond à chaque noeud de service ;
l'obtention, à partir du deuxième ensemble de descripteurs d'instances correspondant à chaque noeud de service, d'un troisième ensemble de descripteurs d'instances pour lequel une capacité maximale est supérieure à la capacité de demande du noeud de service ;
l'obtention, à partir du troisième ensemble de descripteurs d'instances correspondant à chaque noeud de service, d'un quatrième ensemble de descripteurs instances pour lequel une valeur de lot de traitement moyenne est supérieure au volume de données maximum ; et
l'obtention, en fonction de l'utilisation et/ou d'une priorité d'une ressource d'accélération d'une fonction de réseau correspondant à chaque descripteur d'instance provenant du quatrième ensemble de descripteurs d'instances correspondant à chaque noeud de service, d'un descripteur d'instance satisfaisant l'exigence de fonction de réseau du noeud de service ; et
lorsque le noeud de service est situé sur la chaîne de services, la réalisation d'une configuration de fonction de réseau sur le noeud de service en fonction des fichiers d'instances de NF obtenus comprend :
la direction d'un service de chaque noeud de service sur la chaîne de services vers un plan de données de protection contre les défaillances préconfiguré, dans lequel le service continue d'être traité sur le plan de données de protection contre les défaillances ;
la reconfiguration de chaque noeud de service sur la chaîne de services en fonction des fichiers d'instances de NF obtenus qui satisfont l'exigence de fonction de réseau de chaque noeud de service, afin de générer une nouvelle chaîne de services ; et
la redirection du service se trouvant dans le plan de données de protection contre les défaillances vers la nouvelle chaîne de services.

6. Procédé selon l'une quelconque des revendications 1 à 4, dans lequel les fichiers d'instances de NF comprennent chacun un programme et un fichier de configuration qui implémentent une fonction de réseau correspondante.

7. Procédé selon l'une quelconque des revendications 1 à 6, le procédé comprenant en outre, avant la réception d'une demande de configuration de fonction de réseau :
la configuration de la bibliothèque d'instances de NF en fonction de chaque fonction de réseau et d'un fichier d'image pré-obtenu de chaque dispositif d'accélération.

8. Produit de programme d'ordinateur comprenant des instructions qui, lorsque le programme est exécuté par un ordinateur, amènent l'ordinateur à entreprendre les étapes du procédé selon l'une quelconque des revendications 1 à 7.

9. Appareil de configuration de fonction de réseau virtuel, l'appareil étant configuré pour :
recevoir (S101) une demande de configuration de fonction de réseau envoyée par un système de gestion de réseau, la demande de configuration de fonction de réseau comprenant des exigences de fonction de réseau de multiples noeuds de service dans une chaîne de services ;
obtenir (S102), à partir d'une bibliothèque d'instances de fonctions de réseau, NF, des fichiers d'instances de NF qui satisfont les exigences de fonction de réseau des multiples noeuds de service dans la chaîne de services, dans lequel la bibliothèque d'instances de NF comprend un fichier d'instances pour lequel une fonction de réseau est basée sur un dispositif d'accélération ; et
réaliser (S103) une configuration de fonction de réseau sur les multiples noeuds de service dans la chaîne de services en fonction des fichiers d'instances de NF obtenus.

10. Appareil selon la revendication 9, configuré en outre pour configurer la bibliothèque d'instances de NF en fonction de chaque fonction de réseau et d'un fichier d'image pré-obtenu de chaque dispositif d'accélération, dans lequel la bibliothèque d'instances de NF comprend en outre une table de descriptions de NF, chaque entrée de la table de descriptions de NF comprend un descripteur d'instance, et le descripteur d'instance sert à pour décrire un fichier d'instance pour lequel une fonction de réseau est basée sur un dispositif d'accélération ; et
le descripteur d'instance comprend un type de fonction et au moins un des paramètres suivants : un débit, une capacité maximale, une valeur de lot de traitement moyenne ou une utilisation de dispositif.

11. Appareil selon la revendication 9 ou 10, dans lequel les exigences de fonction de réseau comprennent au moins l'un parmi un débit cible, une capacité de demande, ou un volume de données maximum.

12. Appareil selon la revendication 10 ou 11, configuré spécifiquement pour :
obtenir, à partir de la table de descriptions de NF, une entrée de description de NF comprenant un descripteur d'instance satisfaisant les exigences de fonction de réseau ; et
obtenir, à partir de fichiers d'instance de la bibliothèque d'instances de NF en fonction de l'entrée de description de NF obtenue, les fichiers d'instances de NF qui satisfont les exigences de fonction de réseau.

13. Appareil selon la revendication 12, dans lequel les noeuds de service sont situés sur une chaîne de services, la demande de configuration de fonction de réseau comprend une exigence de fonction de réseau de chaque noeud de service sur la chaîne de services ainsi qu'un débit cible et un volume de données maximum se rapportant à la chaîne de services, l'exigence de fonction de réseau de chaque noeud de service comprend une capacité de demande du noeud de service, et configuré en outre pour :
successivement, obtenir, en fonction de la chaîne de services et de la table de descriptions de NF, un premier ensemble de descripteurs d'instances d'une fonction de réseau correspondant à chaque noeud de service ;
obtenir, à partir du premier ensemble de descripteurs d'instances correspondant à chaque noeud de service, un deuxième ensemble de descripteurs d'instances qui satisfait le débit cible et qui correspond à chaque noeud de service ;
obtenir, à partir du deuxième ensemble de descripteurs d'instances correspondant à chaque noeud de service, un troisième ensemble de descripteurs d'instances pour lequel une capacité maximale est supérieure à la capacité de demande du noeud de service ;
obtenir, à partir du troisième ensemble de descripteurs d'instances correspondant à chaque noeud de service, un quatrième ensemble de descripteurs instances pour lequel une valeur de lot de traitement moyenne est supérieure au volume de données maximum ; et
obtenir, en fonction de l'utilisation et/ou d'une priorité d'une ressource d'accélération d'une fonction de réseau correspondant à chaque descripteur d'instance provenant du quatrième ensemble de descripteurs d'instances correspondant à chaque noeud de service, un descripteur d'instance satisfaisant l'exigence de fonction de réseau du noeud de service.

14. Appareil selon l'une quelconque des revendications 9 à 12, configuré spécifiquement pour :
diriger un service en cours de traitement par les noeuds de service vers un plan de données de protection contre les défaillances préconfiguré, dans lequel le service continue d'être exécuté sur le plan de données de protection contre les défaillances ;
réaliser à nouveau une configuration de fonction de réseau sur les noeuds de service en fonction des fichiers d'instances de NF obtenus qui satisfont les exigences de fonction de réseau des noeuds de service ; et
rediriger le service se trouvant dans le plan de données de protection contre les défaillances vers les noeuds de service au terme de la configuration de fonction de réseau pour les noeuds de service.

15. Appareil selon l'une quelconque des revendications 9 à 14, dans lequel les fichiers d'instances de NF comprennent chacun un programme et un fichier de configuration qui implémentent une fonction de réseau correspondante.
